# EUROPEAN PATENT APPLICATION

(11) **EP 0 978 482 A1**
(43) Date of publication of application: **09.02.2000**
(21) Application number: 98114899.2
(22) Date of filing: 07.08.1998
(51) Int. Cl.: C02F 9/00, C02F 1/24, C02F 1/38, B03D 1/14

(54) **Machine for treating wastewater by centrifugal separation and flotation**

(71) Applicant: Rappini Gherardi, Sergio, 40141 Bologna (IT); Nola, Felice Guglielmo, 40136 Bologna (IT)
(72) Inventor: Rappini Gherardi, Sergio, 40141 Bologna (IT); Nola, Felice Guglielmo, 40136 Bologna (IT)
(74) Representative: Modiano, Guido, Dr.-Ing.

(57) **Abstract**

A machine for treating wastewater, comprising a flotation unit (2) and a centrifugal separator (3) which are mutually connected so that the flotation unit (2) is supplied with pressurized liquid by the clarified liquid discharge port (23) of the centrifugal separator (3).

## Description

The present invention relates to a machine for treating wastewater.

Flotation units are widely used to treat wastewater; said units consist of tanks in which the wastewater is placed in very close contact with air; the air bubbles dispersed in the wastewater are adapted to trap the contaminant solid particles and carry them upward, where they can be separated from the liquid.

Wastewater treatment is preceded by a step for separating the denser sludge, which is usually performed in rather bulky tanks and over rather long periods of time; the injection of pressurized air into the wastewater to be treated also requires the use of rather powerful equipment.

Centrifugal separators are also known for sludge treatment which are adapted to separate the solid components from the liquid ones, but they are unable to treat wastewater beyond a certain level.

The aim of the present invention is to obviate the above drawbacks of the prior art, i.e., to provide a machine for treating wastewater which works with small tanks and with a reduced power consumption and is also capable of treating particularly contaminated sludges, obtaining highly purified water at the discharge port.

Within the scope of this aim, an object of the present invention is to achieve said aim with equipment which is simple, relatively easy to provide in practice, safe in use, effective in operation and has a relatively low cost.

This aim, this object and others which will become apparent hereinafter, are achieved by a machine for treating wastewater, characterized in that it comprises a flotation unit and a centrifugal separator provided with a clarified liquid discharge port, the flotation unit being connected to said centrifugal separator so that the flotation unit is supplied with pressurized liquid by the clarified liquid discharge port of the centrifugal separator.

Further characteristics and advantages of the present invention will become apparent from the following detailed description of a preferred but not exclusive embodiment of a machine for treating wastewater according to the invention, illustrated only by way of non-limitative example in the accompanying drawings, wherein:

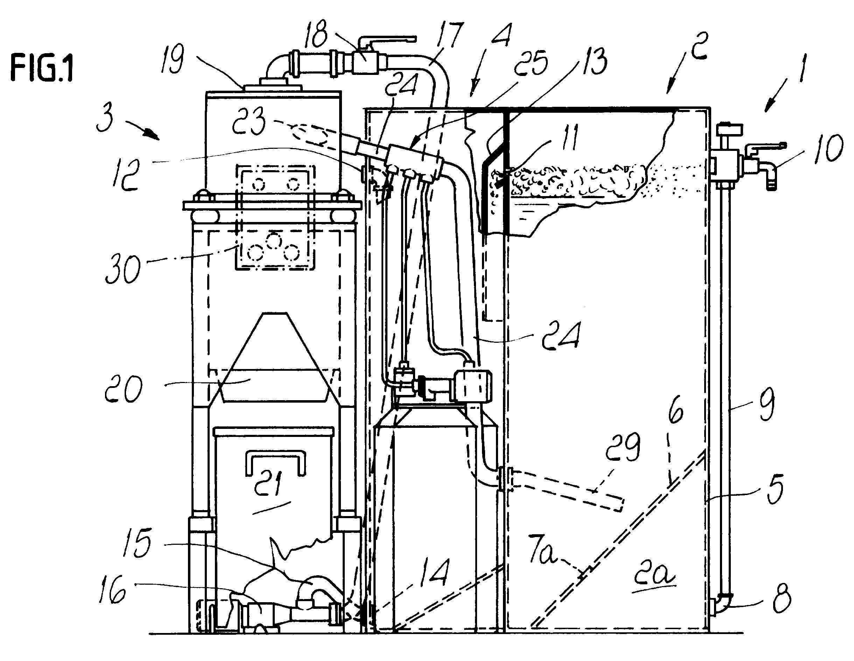

Figure 1 is a schematic side view of a machine for treating wastewater according to the invention;

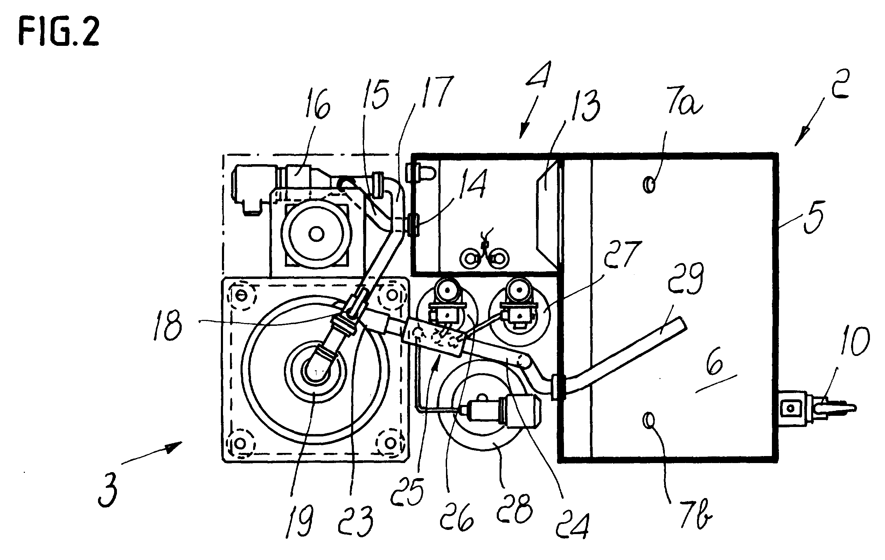

Figure 2 is a schematic plan view of the machine.

With particular reference to the above figures, the reference numeral 1 generally designates a machine for treating wastewater according to the invention.

The machine 1 comprises a flotation unit 2, a vertical centrifugal separator 3 and an accumulation tank 4.

The flotation unit 2 is constituted by a closed chamber 5 which is shaped substantially like a parallelepiped and has, in its lower region, an inclined wall 6 which is crossed by two holes 7a and 7b which connect the base 2a of the flotation unit 2 to the rest of the chamber. The base 2a is connected, by means of a coupling 8, to a substantially vertical pipe for the discharge of the clarified water at the end of the treatment; said discharge is controlled by means of a cock 10.

The flotation unit 2 is provided, in an upward region, with a pollutant discharge port 11, which is connected to the accumulation tank 4; the tank 4 is substantially shaped like a parallelepiped, is as high as the flotation unit 2, and can be monolithic therewith.

The tank 4 is provided, in an upward region, with a first intake port 12 which is connected to a pipe for supplying the machine with the contaminated mixtures to be treated and a second intake port coinciding with the discharge port 11 of the flotation unit.

The discharge port 11 on the side of the tank 4 is partially protected by a flattened riser 13 which is open in a downward region and is closed in an upward region.

In a downward region, the tank 4 is provided with a discharge port 14 which is connected by means of a pipe 15 to a pump 16 feeding through a pipe 17 and a cutoff valve 18 arranged at the upper intake port 19 of the centrifugal separator for the wastewater to be treated.

The vertical centrifugal separator 3 is provided, in a downward region, with a discharge port 20 for the separated solids, below which it is possible to arrange a container 21 for the falling solid fraction.

The separator 3 has an upper tangential discharge port 23 for the extracted pressurized wastewater, which is rich in finely dispersed air; said discharge port is connected, by means of a pipe 24, to a station 25 for mixing and dosing reagents; the station 25 consists substantially of a manifold which is adapted to add reagents, contained in suitable containers 26, 27 and 28 of liquid or gaseous substances introduced under pressure, to the water, which is already rich in air.

The pipe 24 leads to a supply of pressurized water which is rich in air and enriched with reagents and is located in a substantially low position 29 inside the flotation unit 2: in the flotation unit, the air bubbles carry upward the dispersed pollutants.

The machine according to the invention uses the centrifugal separator 3 to separate the solid components contained in the material to be treated which arrives from the first intake port 12, and those separated by the flotation unit 2, which arrive from the second intake port 11; the wastewater separated by the separator and arriving from 23 is also at high pressure and rich in air, i.e., in optimum conditions for feeding the flotation unit 2 after optional enrichment with suitable gases and reagents, without requiring additional energy expenditures.

Recirculation of the wastewater in the machine is controlled by a control unit 30 which is driven by timers and by optional devices for detecting the characteristics of the output water.

The various steps of the operation of the machine according to the invention are as follows: the wastewater enters the centrifugal separator 3, which separates the heavy solid parts from the liquid, which is sent to the flotation unit 2. The liquid at the discharge port 23 of the centrifugal separator 3 is pressurized and rich in microbubbles of air, which allow the chemical and physical action of the flotation unit 2 to be effective.

Before being introduced in the flotation unit 2, the liquid that leaves the centrifugal separator 3 undergoes chemical coagulation by means of suitable reagents which are dosed by the dosage station.

In the flotation unit 2, by means of the microbubbles contained in the pressurized liquid, the sludge produced by the chemical action rises and stratifies in an upward region, leaving the clarified liquid at the bottom.

The sludge that has risen to the surface in the flotation unit 2 settles in the accumulation tank 4, where it is joined by the initial wastewater, together with which it is sent, by means of the pump, to the centrifugal separator 3 by which it is dehydrated.

The liquid leaving the centrifugal separator 3 is pressurized enough to make the action of the flotation unit 2 effective.

It has thus been observed that the invention achieves the intended aim and object and in particular that it provides a machine for treating wastewater which works with smaller tanks, since it treats liquids which have already been pretreated by the centrifugal separator, with a reduced power consumption, since the pressure at which the wastewater is at the discharge of the centrifugal separator and the presence of finely dispersed air in the liquid is utilized to feed the flotation unit.

All the details may also be replaced with other technically equivalent ones.

In practice, the materials employed, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A machine for treating wastewater, characterized in that it comprises a flotation unit and a centrifugal separator provided with a clarified liquid discharge port, the flotation unit being connected to said centrifugal separator so that the flotation unit is supplied with pressurized liquid by the clarified liquid discharge port of the centrifugal separator.

2. The machine according to claim 1, characterized in that an accumulation tank and a pump are provided between said flotation unit and said centrifugal separator and in that the wastewater of the flotation unit is transferred into said tank, from where said pump sends it into the centrifugal separator, which is adapted to separate the coarse solids, which are discharged at the base of the machine, from the liquid fractions, which are pressurized and are rich in finely dispersed air, which are sent to the flotation unit.

3. The machine according to claim 2, characterized in that said pressurized and air-rich liquid fractions that leave the centrifugal separator are sent to a station for the dosage and mixing of reagents required for the chemical and physical coagulation reaction and then to said flotation unit.

4. The machine according to one or more of the preceding claims, characterized in that said flotation unit has, in an upward region, said discharge port for the contaminants and, in a downward region, a discharge port for the clarified water; in that said vertical centrifugal separator is provided, in a downward region, with a discharge port for the separated solids; and in that said tank for accumulating the liquid to be treated is provided, in an upward region, with a first intake port, which is connected to a pipe for feeding the contaminated mixes to be treated, and a second intake port, which is connected to the upper discharge port of the flotation unit and, in a downward region, with a discharge port which is connected to said pump which leads to the upper intake port of the centrifugal separator for the wastewater to be treated, said separator having a discharge port for the pressurized wastewater extracted by the centrifugal separator which is connected to said reagent dosage station which is connected, by means of a pipe, to a supply of pressurized water arranged in a substantially downward position in the flotation unit, said connections being adapted to produce the recirculation of the contaminants and of the partially clarified wastewater between the centrifugal separator and the flotation unit.

5. The machine according to claim 4, characterized in that said accumulation tank and said flotation unit are constituted by two chambers which are connected by means of said second intake port.
